# EUROPEAN PATENT APPLICATION

(11) **EP 1 724 856 A2**
(43) Date of publication of application: **22.11.2006**
(21) Application number: 06252127.3
(22) Date of filing: 19.04.2006
(51) Int. Cl.: H01M 2/10

(54) **Battery**

(30) Priority: 21.04.2005 JP 2005123524
(71) Applicant: SONY CORPORATION, Tokyo 141-0001 (JP)
(72) Inventor: Takeshita, Toshio, c/o Sony Corporation, Tokyo 141-0001 (JP); Miyajima, Yoichi, c/o Sony Corporation, Tokyo 141-0001 (JP); Kamaya, Naoki, c/o Sony Corporation, Tokyo 141-0001 (JP); Shintani, Shoichi, c/o Sony Corporation, Tokyo 141-0001 (JP)
(74) Representative: Smith, Samuel Leonard

(57) **Abstract**

A battery of the present invention includes a rectangular case that has an upper surface and a lower surface positioned at both ends of its thickness, left and right side surfaces positioned at both ends of its width, and a front surface and a rear surface positioned at both ends of its length, a battery cell housed within the above-mentioned case, and a connector section provided on the above-mentioned front surface and connected to the above-mentioned battery cell. Midway in the thickness direction of the above-mentioned left and right side surfaces of the above-mentioned case are provided engagement walls that extend along the length of the case parallel to the above-mentioned upper surface and lower surface and that protrude outward in the width direction. Notches are provided in each of the above-mentioned left and right engagement walls.

## Description

### BACKGROUND OF THE INVETION

### 1. Field of the Invention

The present invention relates to a battery.

### 2. Description of Related Art

A battery that is used in electronic devices includes a case, a battery cell housed inside the case, and a connector section that is provided on the case and connected to the battery cell.
Such a battery, in many cases, is configured in such a manner that its connector section becomes connected to a connector section of an electronic device within a battery housing space inside the casing of the electronic device by being inserted through an opening provided on the casing of the electronic device and housed in the above-mentioned battery housing space.
On the other hand, there is also proposed a battery that may be housed within the above-mentioned battery housing space while also being attachable to a battery attachment section provided on the outside of the casing of an electronic device in an open fashion. (see Japanese Patent Application Publication No. Hei 8-298104)
In this battery, a plurality of engagement recess sections that sink inward are provided on the side of the case, and the battery is configured in such a manner that it is attached to the battery attachment section by having the above-mentioned engagement recess sections engage with a plurality of engagement protrusion sections provided on the above-mentioned battery attachment section.
Conventionally, in a battery, a plurality of cylindrical battery cells are arranged in a parallel manner along their lengths within the case of the battery, and therefore some dead space is created between the perimeter of adjacent battery cells and the inner surface of the case. In the above-mentioned battery that uses the engagement recess sections, the above-mentioned engagement recess sections are arranged in this dead space, thereby making efficient use of the dead space.

### SUMMARY OF THE INVENTION

However, in recent years, batteries with a rectangular plate-like shape are becoming more popular due to a trend towards thinner and smaller electronic devices. With such batteries, both the battery cell as well as the case take on a rectangular plate-like shape, and there is almost no dead space between the outer surface of the battery cell housed within the case and the inner surface of the case.
Therefore, in this kind of a battery, if one were to secure between the inner surface of the case and the outer surface of the battery cells the space for the above-mentioned engagement recess sections, the case would become extremely large, and it would be disadvantageous in obtaining smaller and thinner batteries.
The present invention is made in view of such circumstances, and seeks to provide a battery which can be loaded both in a battery housing space provided in the casing of an electronic device as well as onto a battery attachment section provided on the casing of the electronic device in an open manner, and which is advantageous in making itself smaller and thinner.

In order to address the issues above, a battery of the present invention includes a rectangular case that has an upper surface and a lower surface positioned at both ends of its thickness, left and right side surfaces positioned at both ends of its width, and a front surface and a rear surface positioned at both ends of its length, a battery cell housed within the above-mentioned case, and a connector section provided on the above-mentioned front surface and connected to the above-mentioned battery cell. Midway in the thickness direction of the above-mentioned left and right side surfaces of the above-mentioned case are provided engagement walls that extend along the length of the case parallel to the above-mentioned upper surface and lower surface and that protrude outward in the width direction. Notches are provided in each of the above-mentioned left and right engagement walls.

According to a battery of the present invention, since the engagement walls are provided roughly midway in the thickness direction of the left and right side surfaces of the case, while notches are provided in each of the left and right engagement walls, by making use of the engagement walls and the notches, batteries with differing thicknesses can be loaded both in a battery housing space and onto a battery attachment section.
In addition, unlike what is conventional, since there is no need for the engagement recess section that sinks inward into the case, the space that is conventionally provided within the case between the inner surface of the case and the battery cells can be omitted, and it is advantageous in obtaining smaller and thinner cases.
Further features of the invention, and the advantages offered thereby, are explained in detail hereinafter, in reference to specific embodiments of the invention illustrated in the accompanying drawings.
The invention will now be described, purely by way of example, with reference to the following figures.
Fig. 1A is a perspective view of a first battery 2 used in the first embodiment, and Fig. 1B is a perspective view of the first battery 2 in Fig. 1A as viewed in the direction indicated by arrow B;
Fig. 2A is a perspective view of a second battery 4 used in the first embodiment, and Fig. 2B is a perspective view of the second battery 4 in Fig. 2A as viewed in the direction indicated by arrow B;
Fig. 3 is a perspective view of a battery housing space 40;
Fig. 4 is a sectional view of the battery housing space 40;
Fig. 5A is a diagram indicating a state where the first battery 2 is housed in the battery housing space 40, and Fig. 5B is a diagram indicating a state where the second battery 4 is housed in the battery housing space 40;
Fig. 6 is a perspective view of a battery attachment section 50;
Fig. 7A is a diagram indicating a state where the first battery 2 is attached to the battery attachment section 50, and Fig. 7B is a diagram indicating a state where the second battery 4 is attached to the battery attachment section 50;
Fig. 8A is a perspective view of a first battery 2 used in the second embodiment, and Fig. 8B is a perspective view of the first battery 2 in Fig. 8A as viewed in the direction indicated by arrow B;
Fig. 9A is a perspective view of a second battery 4 used in the second embodiment, and Fig. 9B is a perspective view of the second battery 4 in Fig. 9A as viewed in the direction indicated by arrow B;
Fig. 10 is a perspective view of an electronic device that uses the first and second batteries 2 and 4;
Fig. 11 is a perspective view of a battery attachment section of the electronic device; and
Fig. 12A is a diagram indicating a state where the first battery 2 is attached to the battery attachment section 50, and Fig. 12B is a diagram indicating a state where the second battery 4 is attached to the battery attachment section 50.

### DESCRIPTION OF THE PREFERRED EMBODIMENTS

### <First Embodiment>

The first embodiment of the present invention will be described with reference to the drawings.

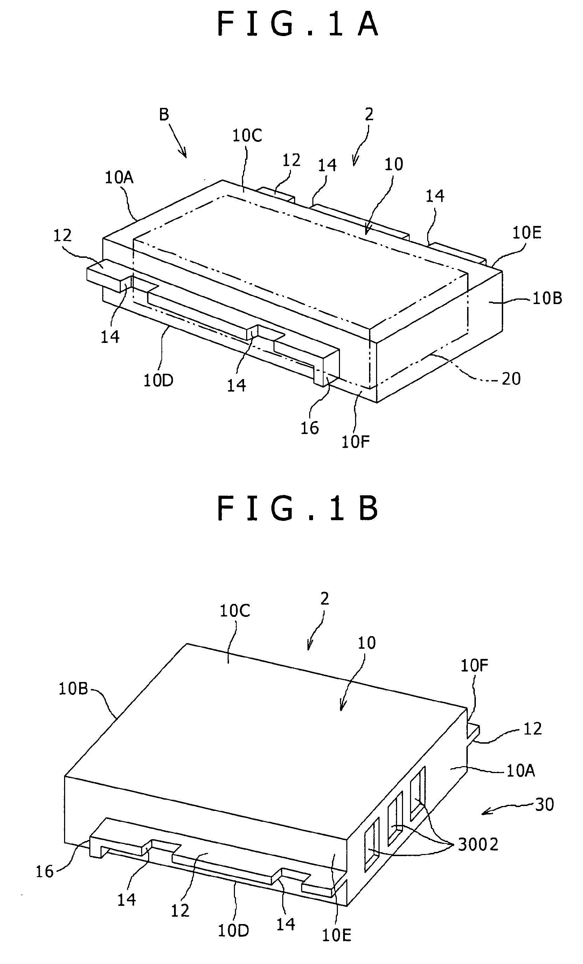

Fig. 1A is a perspective view of a first battery 2 used in the first embodiment, and Fig. 1B is a perspective view of the first battery 2 in Fig. 1A as viewed in the direction indicated by arrow B.

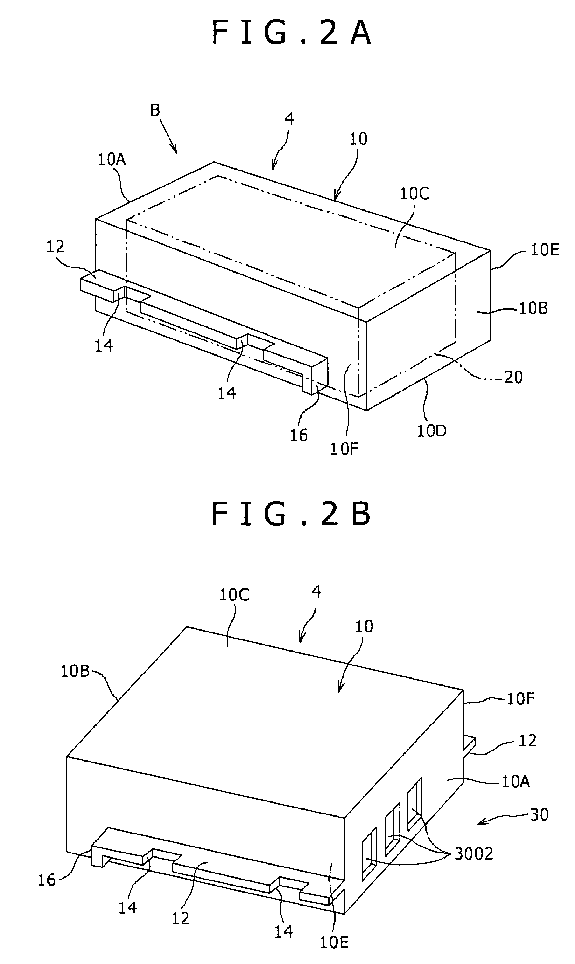

Fig. 2A is a perspective view of a second battery 4 used in the first embodiment, and Fig. 2B is a perspective view of the second battery 4 in Fig. 2A as viewed in the direction indicated by arrow B.

As shown in Fig. 1A and 1B, the first battery 2 is a power source of a small capacity and includes a hollow case 10 of a flat rectangular plate-like shape, a battery cell 20 of a rectangular plate-like shape which is housed within the case 10 and which is indicated with a chain double-dashed line, and a connector section 30 provided on the case 10.
The case 10 includes an upper surface 10C and a lower surface 10D that are positioned on both ends of the thickness of the case 10, left and right side surfaces 10E and 10F positioned on both ends of the width of the case 10, and a front surface 10A and a rear surface 10B positioned on both ends of the length of the case 10. It is to be noted that for purposes of convenience, the left and right directions of the case 10 refer to the left and right directions when the case 10 is viewed from the front.

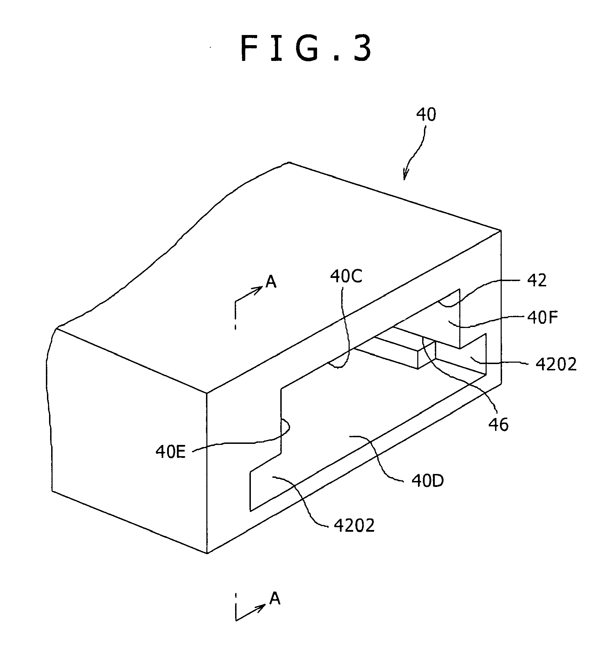

Roughly midway of each of the left and right side surfaces 10E and 10F in the thickness direction is provided an engagement wall 12 that extends along the length of the case 10 and parallel to the upper surface 10C and the lower surface 10D and that protrudes outward in the width direction.
In the present embodiment, the position of the engagement walls 12 in the thickness direction is determined in relation to the lower surface 10D, and each engagement wall 12 of the left and right side surfaces 10E and 10F is formed at an equal distance from the lower surface 10D.
The thicknesses of the left and right engagement walls 12 are equal, and are uniform along their lengths.
In other words, the left and right engagement walls 12 are formed at the same position on the left and right side surfaces 10E and 10F in the thickness and length directions, and are so formed to have the same shape.
Notches 14 are provided on each of the left and right engagement walls 12.
In the present embodiment, two notches 14 are provided at a certain interval in the length direction, and each of the two notches 14 is formed at corresponding places in the same shape on the left and right engagement walls 12 in the length direction.
In addition, at the rear end of the left and right engagement walls 12 at corresponding places in the length direction are provided locking walls 16 for preventing backward insertion. The locking walls 16 are of the same shape and they extend in the thickness direction of the case 10.
In the present embodiment, the locking walls 16 are connected to the rear end of the engagement walls 12, and they extend towards the lower surface 10D in a direction orthogonal to the direction in which the engagement walls 12 extend.
The engagement walls 16 prevent the rear surface 10B of the case 10 from being inserted into a battery housing space 40 of an electronic device (see Fig. 3).

The battery cell 20 has a rectangular plate shape that is slightly smaller than the case 10. In other words, the cross-section of the battery cell 20 would have a rectangular shape of a size that is housable within the case 10.
The battery cell 20 has an upper surface and a lower surface positioned at both ends of its thickness, left and right side surfaces positioned at both ends of its width, and a front surface and a rear surface positioned at both ends of its length. The battery cell 20 is housed within the case 10 in such a manner that the upper surface, lower surface, left and right side surfaces, front surface and rear surface are parallel to and face the upper surface 10C, the lower surface 10D, the left and right side surfaces 10E and 10F, the front surface 10A and the rear surface 10B of the case 10, respectively.

The connector section 30 is provided on the front surface 10A of the case 10 and faces forward.
In the present embodiment, the connector section 30 includes three contacts 3002 that are provided at regular intervals in the width direction on a portion of the front surface 10A slightly towards the left side. These three contacts 3002 are so provided that they are exposed through openings provided on the front surface 10A.
The position of the connector section 30 on the front surface 10A in the thickness direction is determined in relation to the lower surface 10D.
Two of the three contacts 3002 are electrically connected to the positive and negative terminals of the battery cell 20, and the remaining contact 3002 is electrically connected to a data communications terminal of a control circuit (not shown in the drawing) that is housed within the case 10.
The above-mentioned control circuit is provided inside the case 10 and has such functions as handling data like the properties and identification information of the battery 2 with the control section of an electronic device via the above-mentioned contact 3002 for data communications, and monitoring the output voltage and output current of the battery cell 20.

Next, the second battery 4 will be described.
As shown in Fig. 2B, the second battery 4 is a power source of a large capacity, and the second battery 4 differs from the first battery 2 in terms of its thickness, and its configuration is otherwise similar to the first battery 2.
As shown in Figs. 2A and 2B, the case 10 of the first battery 2 and a case 10 of the second battery 4 are equal in width and length, but the thickness of the case 10 of the second battery 4 is greater than the thickness of the case 10 of the first battery 2.
The connector section 30 provided on the first battery 2, and a connector section 30 provided on the second battery 4 are of the same shape and structure.
The position of the connector section 30 of the second battery 4 in the thickness direction is, as with the first battery 2, determined in relation to the lower surface 10D and are provided at the same position as the first battery 2. In addition, the position of the connector section 30 of the second battery 4 in the width direction is also equal to the position of the connector section 30 of the first battery 2.
In addition, as with the first battery 2, roughly midway of each of the two side surfaces 10E and 10F in the thickness direction is provided an engagement wall 12 that extends along the length of the case 10 and parallel to the upper surface 10C and the lower surface 10D while protruding outward in the width direction. Each of the engagement walls 12 is provided on a portion of each of the side surfaces 10E and 10F away from the center portion in the thickness direction and closer to the lower surface 10D.
In addition, the left and right engagement walls 12 are, as in the first battery 2, provided with notches 14.
In addition, as in the first battery 2, locking walls 16 for preventing backward insertion and which extend in the thickness direction are provided on the rear end of the engagement walls 12.
The position of the engagement walls 12 of the second battery 4 in the thickness direction is, as in the first battery 2, determined in relation to the lower surface 10D and in equal dimensions as the first battery 2. The engagement walls 12, the notches 14 and the locking walls 16 of the first battery 2 and the second battery 4 are of the same shape, and they are provided at the same distance from the lower surface 10D and at the same position in the length direction.

Next, the battery housing space 40 into which the first and second batteries 2 and 4 are loaded will be described with reference to Fig. 3, Fig. 4 and Figs. 5A and 5B.

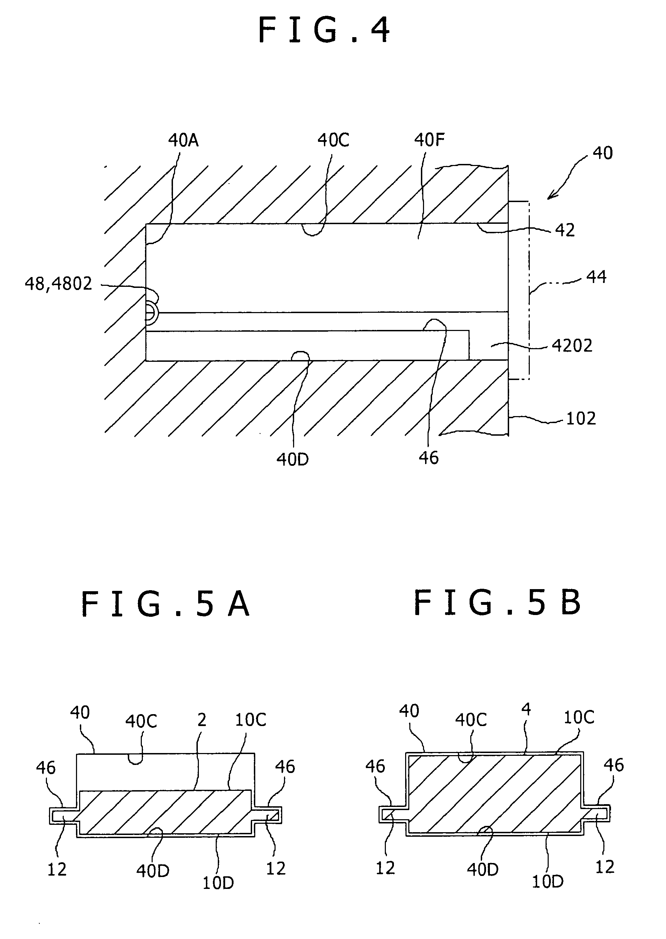

Fig. 3 is a perspective view of the battery housing space 40. Fig. 4 is a sectional view of the battery housing space 40. Fig. 5A is a diagram showing a state where the first battery 2 is housed in the battery housing space 40, and Fig. 5B is a diagram showing a state where the second battery 4 is housed in the battery housing space 40.
As shown in Fig. 3, the battery housing space 40 is provided on a casing 102 of an electronic device, and the battery housing space 40 includes an opening 42 that faces outward from the casing 102.
As shown in Fig. 4 and Fig. 5B, the battery housing space 40 includes a front surface 40A, an upper surface 40C, a lower surface 40D, and left and right side surfaces 40E and 40F that form a space of a size large enough to house the second battery 4.
Engagement grooves 46, which extend along the direction in which the first and second batteries 2 and 4 are inserted and with which the engagement walls 12 on the left and right side surfaces 10E and 10F of the first and second batteries 2 and 4 can engage, are provided on the left and right side surfaces 40E and 40F on a portion that is closer to the lower surface 40D.
In addition, recess sections 4202 for housing the left and right locking walls 16 are provided on a portion of the left and right side surfaces 40E and 40F next to the opening 42.
In addition, on the front surface 40A is provided an electronic device side connector section 48 that connects with the connector section 30 of the first and second batteries 2 and 4 when the first and second batteries 2 and 4 are housed in the battery housing space 40 with their engagement walls 12 engaged with the engagement grooves 46 of the battery housing space 40.
The electronic device side connector section 48 includes a plurality of contacts 4802 that are arranged in the left-right direction on the front surface 40A at certain intervals, and the plurality of contacts 4802 are able to come into contact with the plurality of contacts 3002 of the connector section 30 of the first and second batteries 2 and 4.
In addition, the position of the engagement grooves 46, the electronic device side connector section 48 and the like between the upper surface 40C and the lower surface 40D is determined in relation to the lower surface 40D.

The battery housing space 40 is so configured that by having the first battery 2 turn its front surface 10A in the front direction from the opening 42, have the engagement walls 12 engaged with the engagement grooves 46, be inserted in the direction of its length (front-rear direction) and have the locking walls 16 housed in the recess sections 4202, the front surface 40A, the lower surface 40D and the left and right side surfaces 40E and 40F face the front surface 10A, the lower surface 10D, and the left and right side surfaces 10E and 10F, respectively, of the case 10 of the first battery 2, and as shown in Fig. 5A, a space corresponding to the difference in thickness between the first battery 2 and the second battery 4 is secured between the upper surface 40C of the battery housing space 40 and the upper surface 10C of the first battery 2.
In addition, the battery housing space 40 is so configured that by having the second battery 4 turn its front surface 10A in the front direction from the opening 42, have the engagement walls 12 engaged with the engagement grooves 46, be inserted in the direction of its length (front-rear direction) and have the locking walls 16 housed in the recess sections 4202, as shown in Fig. 5B, the front surface 40A, the upper surface 40C, the lower surface 40D and the left and right side surfaces 40E and 40F face the front surface 10A, the upper surface 10C, the lower surface 10D, and the left and right side surfaces 10E and 10F, respectively, of the case 10 of the second battery 4.
An open-close lid 44 is provided on the opening 42 in such a manner that it can be opened and closed, and a lock mechanism for maintaining a closed state is provided. By closing and locking the open-close lid 44 while the first or second battery 2 or 4 is housed in the battery housing space 40, the open-close lid 44 comes into contact with the rear surface 10B, and a housed state for the first or second battery 2 or 4 is maintained.

Next, the housing and taking out of a battery in and from the battery housing space 40 will be described.
In order to house the first battery 2 in the battery housing space 40, the open-close lid 44 is opened, the lower surface 10D and the left and right side surfaces 10E and 10F of the case 10 of the first battery 2 are brought towards the lower surface 40D and the left and right side surfaces 40E and 40F, respectively, of the battery housing space 40, the engagement walls 12 of the first battery 2 are inserted into the engagement grooves 46 of the battery housing space 40 and pressed inward, and the locking walls 16 are housed in the recess sections 4202.
Thus, the contacts 3002 of the connector section 30 and the contacts 4802 of the electronic device side connector section 48 come into contact with one another, and the connector section 30 is attached to the electronic device side connector section 48.
Next, the open-close lid 44 is closed and locked.
Thus, a DC current from the first battery 2 is provided to various sections of the electronic device.
In order to take out the first battery 2, the lock of the open-close lid 44 is undone, the open-close lid 44 is opened, the rear of the first battery 2 is held, and the first battery 2 is slid out from the battery housing space 40.

In addition, in order to house the second battery 4, as in the case of the first battery 2, the open-close lid 44 is opened, the upper surface 10C, the lower surface 10D and the left and right side surfaces 10E and 10F of the case 10 of the second battery 4 are brought towards the upper surface 40C, the lower surface 40D and the left and right side surfaces 40E and 40F, respectively, of the battery housing space 40, the engagement walls 12 of the second battery 4 are inserted into the engagement grooves 46 of the battery housing space 40 and pressed inward, and the locking walls 16 are housed in the recess sections 4202.
Thus, the contacts 3002 of the connector section 30 and the contacts 4802 of the electronic device side connector section 48 come into contact with one another, and the connector section 30 is attached to the electronic device side connector section 48.
Next, the open-close lid 44 is closed and locked.
Thus, a DC current from the second battery 4 is provided to various sections of the electronic device.
In order to take out the second battery 4, the lock of the open-close lid 44 is undone, the open-close lid 44 is opened, the rear of the second battery 4 is held, and the second battery 4 is slid out from the battery housing space 40.

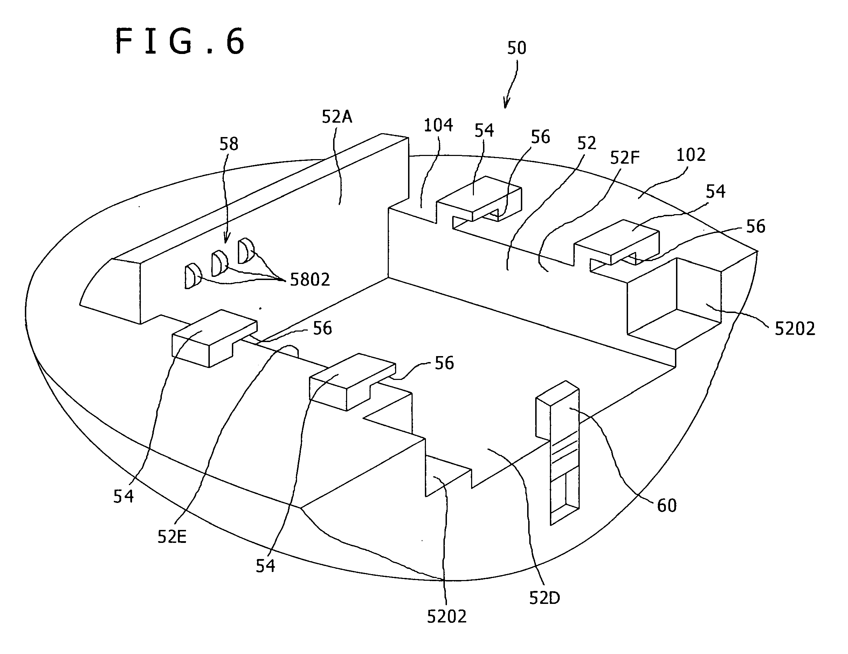

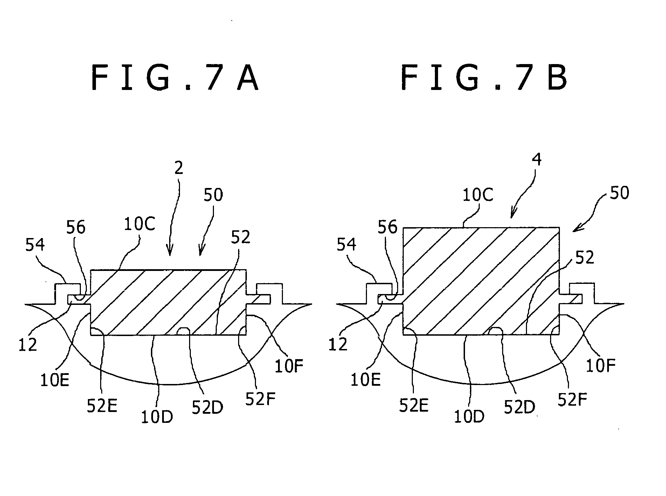

Next, the battery attachment section 50 to which the first and second batteries 2 and 4 may be attached will be described with reference to Fig. 6 and Figs. 7A and 7B.
Fig. 6 is a perspective view of the battery attachment section 50.
Fig. 7A is a diagram showing a state where the first battery 2 is attached to the battery attachment section 50, and Fig. 7B is a diagram showing a state where the second battery 4 is attached to the battery attachment section 50.
As shown in Fig. 6, the battery attachment section 50 is provided on the casing 102 of the electronic device in an open manner.
The battery attachment section 50 includes a housing recess section 52 that sinks inward with respect to the casing 102 of the electronic device.
The housing recess section 52 is formed to have a size and depth that allow the lower half of the first battery 2 to be housed, and that allow the lower part of the second battery 4 to be housed.
The housing recess section 52 includes a front surface 52A, a lower surface 52D, and left and right side surfaces 52E and 52F that face the front surface 10A, the lower surface 10D, and the left and right side surfaces 10E and 10F, respectively, of the case 10, and the upper part and rear part of the housing recess section 52 is open.
On each side of an upper surface 104 that is continuous with the left and right side surfaces 52E and 52F are provided two engagement sections 54, which have an outline that allows them to pass through the notches 14, in a protruding manner in the front-rear direction with a gap in-between, and the engagement sections 54 on the left and right sides of the upper surface 104 are provided at corresponding positions in the front-rear direction.
Each engagement section 54 includes an engagement groove 56 whose portion that faces the housing recess section 52 and whose portion that faces the rear direction are open. The engagement grooves 56 of the engagement sections 54 on the left and right sides are formed so as to be symmetrical with one another, and these engagement grooves 56 are formed to be wider than the thickness of the engagement walls 12 so that the portion of the engagement walls 12 that face the notches 14 can be inserted.
To the rear of the left and right side surfaces 52E and 52F are formed notches 5202, which are for housing the locking walls 16, in such a manner that they are open in the upper and rear direction.
An electronic device side connector section 58 is provided on the front surface 52A. The electronic device side connector section 58 includes a plurality of contacts 5802 that are arranged in the left-right direction at certain intervals on the front surface 52A, and the plurality of contacts 5802 are able to come into contact with the plurality of contacts 3002 of the connector section 30 of the first and second batteries 2 and 4.
When the engagement walls 12 of the first battery 2 or the second battery 4 is brought towards the left and right sides of the upper surface 104, the engagement sections 54 passed through the notches 14 of the engagement walls 12, and the first or second battery 2 or 4 brought closer to the housing recess section 52, the left and right engagement walls 12 are mounted upon the left and right sides of the upper surface 104. At this point, if the first or second battery 2 or 4 is moved towards the front surface 52A, the portion of each of the engagement walls 12 facing the notch 14 is engaged with the engagement groove 56, and in this state, the connector section 30 of the first or second battery 2 or 4 is connected with the electronic device side connector section 58.
The position of the upper surface 104, the electronic device side connector section 58 and the like in the depth direction of the housing recess section 52 is determined in relation to the lower surface 52D.
At the rear end of the housing recess section 52 is provided, in such a manner that it can be pulled out or pushed back in, a locking lug 60 for holding the housed battery, and the locking lug 60 is constantly biased in the protruding direction by a spring.

Next, the attachment or detachment of the battery to or from the battery attachment section 50 will be described.
In order to attach the first battery 2 to the battery attachment section 50, the front surface 10A, the lower surface 10D and the left and right side surfaces 10E and 10F of the case 10 of the first battery 2 are made to face, in the upper side of the battery attachment section 50, the front surface 52A, the lower surface 52D and the left and right side surfaces 52E and 52F, respectively, of the housing recess section 52, while each of the notches 14 of the engagement walls 12 of the first battery 2 is made to fit with the respective engagement section 54.
Then, each engagement section 54 is passed through the corresponding notch 14 to move the first battery 2 in the direction of the lower surface 52D, thereby mounting the left and right engagement walls 12 upon the left and right sides of the upper surface 104, and housing the lower half of the first battery 2 in the housing recess section 52. In so doing, the locking lug 60 is pressed down by being pressed against the lower surface 10D of the first battery 2.
If, in this state, the first battery 2 is moved in the direction of the front surface 52A, the portions of the engagement walls 12 next to the notches 14 are engaged with the corresponding engagement grooves 56, and the contacts 3002 of the connector section 30 and the contacts 5802 of the electronic device side connector section 58 contact one another.
At this point, as the lower surface 10D moves away from the locking lug 60, the locking lug 60 protrudes upward and engages with the rear surface 10B of the first battery 2, and the first battery 2 is attached to the battery attachment section 50.
Thus, a DC current from the first battery 2 is provided to various sections of the electronic device.
In order to detach the first battery 2, the first battery 2 is moved backward in a state where the locking lug 60 is pressed down so as to be disengaged from the rear surface 10B of the first battery 2, thereby placing each engagement section 54 within the corresponding notch 14 of the engagement walls 12 of the first battery 2.
Next, the rear of the first battery 2 is held, and the first battery 2 is taken out upward from the housing recess section 52.

In addition, in order to attach the second battery 4, as in the case of attaching the first battery 2, the front surface 10A, the lower surface 10D and the left and right side surfaces 10E and 10F of the case 10 of the second battery 4 are made to face, in the upper side of the battery attachment section 50, the front surface 52A, the lower surface 52D and the left and right side surfaces 52E and 52F, respectively, of the housing recess section 52, while each of the notches 14 of the engagement walls 12 of the second battery 4 is made to fit with the respective engagement section 54.
Then, each engagement section 54 is passed through the corresponding notch 14 to move the second battery 4 in the direction of the lower surface 52D, thereby mounting the left and right engagement walls 12 upon the left and right sides of the upper surface 104, and housing the lower portion of the second battery 4 in the housing recess section 52. In so doing, the locking lug 60 is pressed down by being pressed against the lower surface 10D of the second battery 4.
If, in this state, the second battery 4 is moved in the direction of the front surface 52A, the portions of the engagement walls 12 next to the notches 14 are engaged with the corresponding engagement grooves 56, and the contacts 3002 of the connector section 30 and the contacts 5802 of the electronic device side connector section 58 contact one another.
At this point, as the lower surface 10D moves away from the locking lug 60, the locking lug 60 protrudes upward and engages with the rear surface 10B of the second battery 4, and the second battery 4 is attached to the battery attachment section 50.
Thus, a DC current from the second battery 4 is provided to various sections of the electronic device.
In order to detach the second battery 4, the second battery 4 is moved backward in a state where the locking lug 60 is pressed down so as to be disengaged from the rear surface 10B of the second battery 4, thereby placing each engagement section 54 within the corresponding notch 14 of the engagement walls 12 of the second battery 4.
Next, the rear of the second battery 4 is held, and the second battery 4 is taken out upward from the housing recess section 52.

According to the first embodiment, on the left and right side surfaces 10E and 10F and midway in the direction of the thickness of the case 10 of the first and second batteries 2 and 4 are provided engagement walls 12 that extend along the length of the case 10 and parallel to the upper surface 10C and the lower surface 10D and that protrude outward in the width direction. In addition, the notches 14 are provided in each of the left and right engagement walls 12.
Therefore, by making use of the engagement walls 12 and the notches 14, the first and second batteries 2 and 4 of differing thicknesses can be housed or attached in or to the battery housing space 40 and the battery attachment section 50 that have different styles of housing or attachment.
In addition, unlike what is conventional, since the first and second batteries 2 and 4 do not need engagement recess sections that sink inward on the case 10, the space conventionally provided between the inner surface of the case 10 and the battery cell 20 can be omitted, and it is advantageous in making the case 10 smaller and thinner.
In particular, in housing the battery cell 20 of a rectangular plate-like shape in the case 10 as in the present embodiment, if a space for the above-mentioned engagement recess sections is to be secured between the inner surface of the case 10 and the battery cell 20 as is conventional, the case 10 would inevitably become extremely large. For such a reason, the present invention is suitable for a battery that uses the battery cell 20 of a rectangular plate-like shape.
In addition, in the present embodiment, since the position of the connector section 30 and the position of the engagement walls 12 in the direction of the thickness of the case 10 are determined in relation to the lower surface 10D, the battery housing space 40 and the battery attachment section 50 that houses the first and second battery 2 and 4 of differing thicknesses or to which they are attached can be provided easily with the lower surface 10D or the engagement walls 12 as a reference.

### <Second Embodiment>

Next, the second embodiment will be described.
The second embodiment differs from the first embodiment in that only one notch 14 is provided on each of the left and right engagement walls 12.

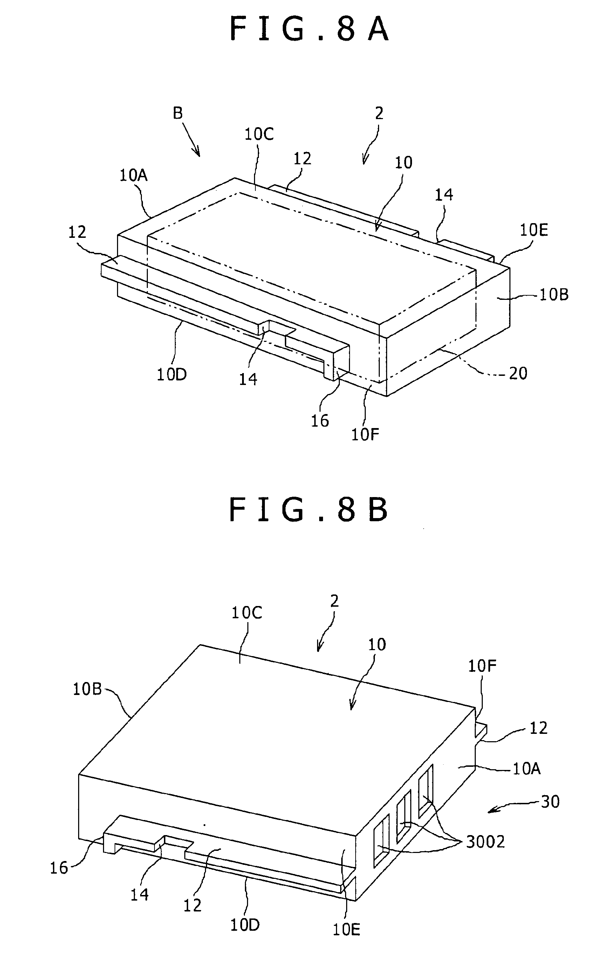

Fig. 8A is a perspective view of the first battery 2 used in the second embodiment, and Fig. 8B is a perspective view of the first battery 2 in Fig. 8A as viewed in the direction indicated by arrow B.

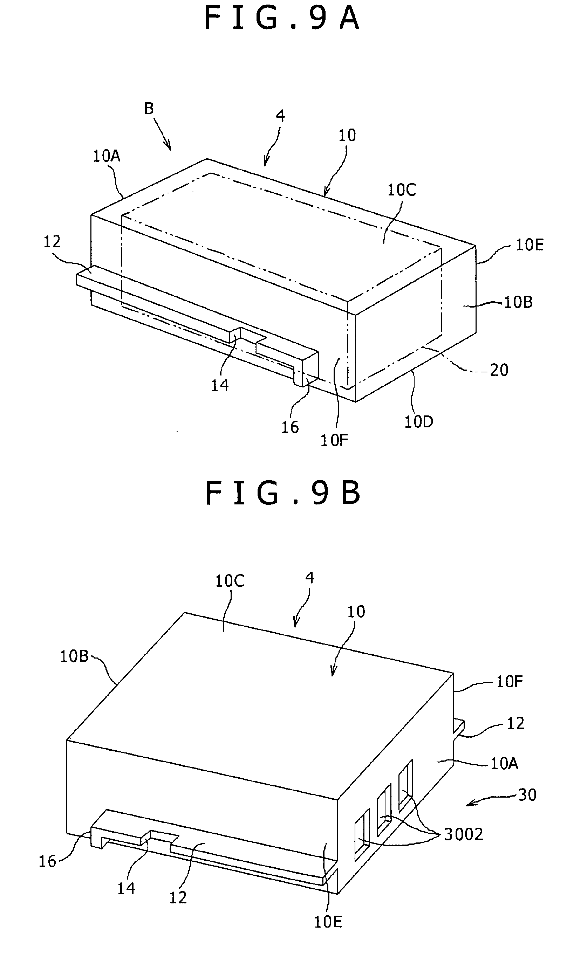

Fig. 9 is a perspective view of the second battery 4 used in the second embodiment, and Fig. 9B is a perspective view of the second battery 4 in Fig. 9A as viewed in the direction indicated by arrow B.

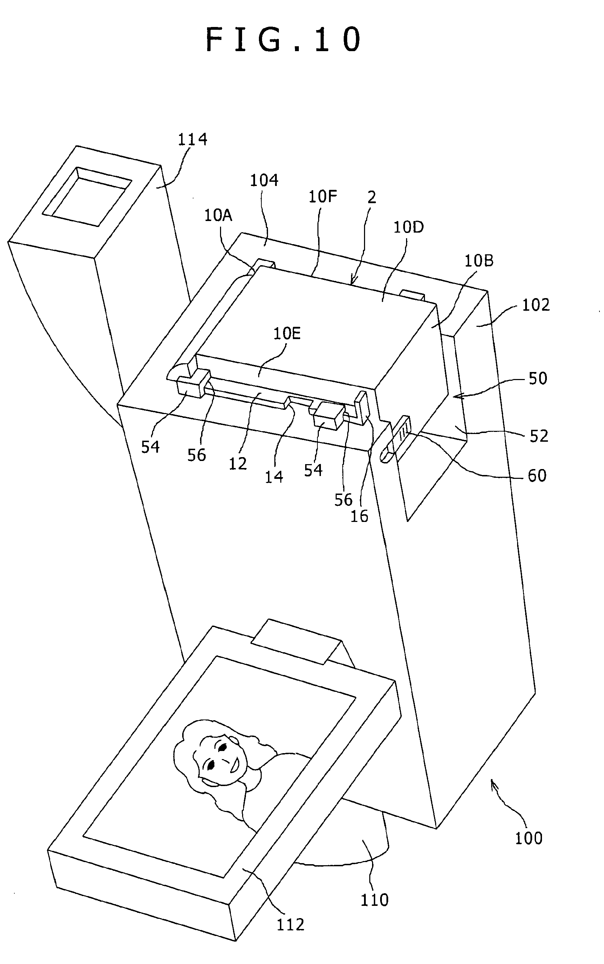

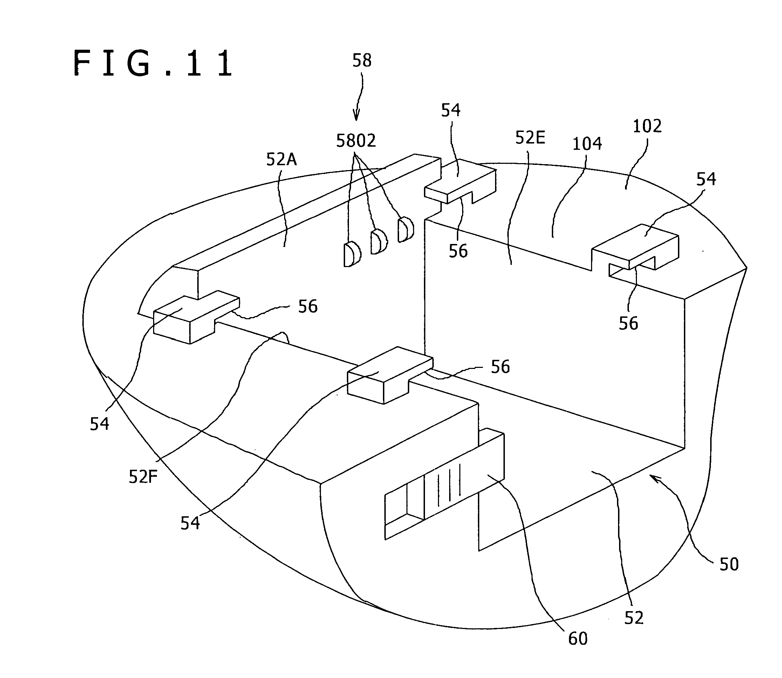

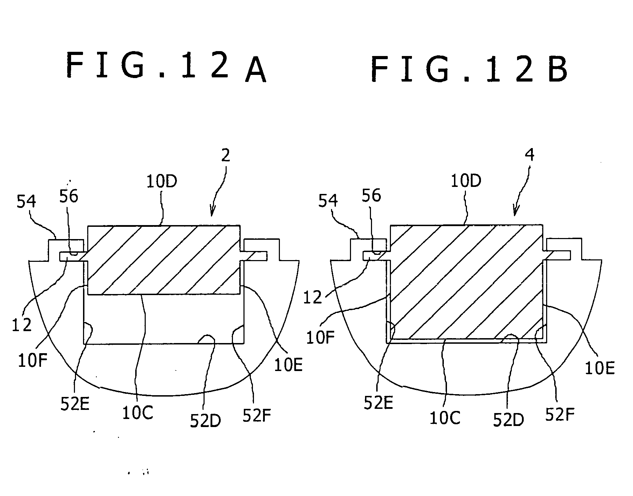

Fig. 10 is a perspective view of an electronic device that uses the first and second batteries 2 and 4. Fig. 11 is a perspective view of a battery attachment section of the electronic device. Fig. 12A is a diagram showing a state where the first battery 2 is attached to the battery attachment section 50, and Fig. 12B is a diagram showing a state where the second battery 4 is attached to the battery attachment section 50.

As shown in Figs. 8A, 8B, 9A and 9B, the first and second batteries 2 and 4 differ in thickness as in the first embodiment.
The engagement wall 12 is provided on each of the left and right side surfaces 10E and 10F of the case 10 as in the first embodiment.
The notch 14 is provided on each of the left and right engagement walls 12, and unlike the first embodiment, just one notch 14 is provided on each of the left and right engagement walls 12 in the second embodiment.
The notches 14 on the left and right engagement walls 12 are provided at the same place in the front-rear direction and with the same shape.
In addition, at the rear ends of the left and right engagement walls 12, which are at the same position, the locking walls 16 for preventing backward insertion and which extend in the thickness direction are provided in the same shape as in the first embodiment.

As shown in Figs. 8A, 8B, 9A and 9B, the battery cell 20 has a rectangular plate-like shape that is slightly smaller than the case 10. In other words, the cross-section of the battery cell 20 takes on a rectangular shape of a size that can be housed within the case 10 and is similar to the first embodiment.
The connector section 30, as in the first embodiment, is provided on the front surface 10A of the case 10 in such a manner that it faces forward.
The battery housing space 40 into which the first and second batteries 2 and 4 are loaded is similar to the first embodiment.

The battery attachment section 50 to which the first and second batteries 2 and 4 may be attached will be described. As shown in Fig. 10, the battery attachment section 50 is provided in an open fashion on the casing 102 of an electronic device 100 (in the present embodiment, a video camera apparatus).
In Fig. 10, reference numeral 110 is assigned to a tube lens that holds an imaging optical system for shooting a subject and which is provided on the front surface of the casing 102, reference numeral 112 is assigned to a display for displaying images and which is provided on the side of the casing 102, and reference numeral 114 is assigned to a view finder apparatus for viewing images that are shot by the above-mentioned imaging optical system and captured by an image pickup device that is provided inside the casing 102.

As shown in Fig. 10 and Fig. 11, the battery attachment section 50 includes the housing recess section 52 provided on the casing 102 of the electronic device 100 and which sinks inward.
As shown in Figs. 12A and 12B, the housing recess section 52 is of a size and depth that allow the lower half of the first battery 2 to be housed, and that allow the lower portion of the second battery 4 to be housed.
As shown in Fig. 10 and Fig. 11, the housing recess section 52 includes the front surface 52A, the lower surface 52D, and the left and right side surfaces 52E and 52F that face the front surface 10A, the upper surface 10C, and the left and right side surfaces l0E and 10F, respectively, of the case 10, and the top and rear of the housing recess section 52 are open.
The upper surface 104 is continuous with the left and right side surfaces 52E and 52F, and the engagement sections 54 are provided in a protruding manner on the upper surface 104 at a position towards the rear and at a position closer to the front surface 52A on each side.
The engagement sections 54 towards the rear are formed with an outline that allows them to pass through the notches 14.
Each engagement section 54 includes the engagement groove 56 that is open where it faces the housing recess section 52 and where it faces the front and the rear directions.
The engagement grooves 56 are formed to be wider than the thickness of the engagement walls 12 so that the engagement walls 12 can be inserted.

As shown in Fig. 11, the electronic device side connector section 58 is provided on the front surface 52A, and the electronic device side connector section 58 includes the plurality of contacts 5802 that are arranged at certain intervals in the left-right direction on the front surface 52A.
When the engagement walls 12 of the first or second battery 2 or 4 are brought towards the left and right sides of the upper surface 104, the engagement sections 54 passed through the notches 14 of the engagement walls 12, and the first or second battery 2 or 4 brought closer to the housing recess section 52, the left and right engagement walls 12 are mounted upon the left and right sides of the upper surface 104. At this point, if the first or second battery 2 or 4 is moved towards the front surface 52A, the portion of each of the engagement walls 12 adjacent to the notch 14 is engaged with the corresponding engagement groove 56, and the front end of each of the engagement walls 12 located towards the front surface 10A is engaged with corresponding the engagement groove 56 of the engagement section 54 located towards the front.
At the rear end of the housing recess section 52 is provided, in such a manner that it can be pulled out or pushed back in, the locking lug 60 for holding the housed battery, and the locking lug 60 is constantly biased in the protruding direction.

Next, the attaching and detaching of the battery to and from the battery attachment section 50 will be described.
In order to attach the first battery 2 or the second battery 4 to the battery attachment section 50, the front surface 10A, the upper surface 10C and the left and right side surfaces 10E and 10F of the case 10 of the first battery 2 or the second battery 4 are made to face, in the upper side of the battery attachment section 50, the front surface 52A, the lower surface 52D and the left and right side surfaces 52E and 52F, respectively, of the housing recess section 52, while each of the notches 14 of the engagement walls 12 of the first or second battery 2 or 4 is made to fit with the respective engagement section 54.
Then, each engagement section 54 is passed through the corresponding notch 14 to move the first or second battery 2 or 4 in the direction of the lower surface 52D, thereby mounting the left and right engagement walls 12 upon the left and right sides of the upper surface 104, and housing the lower half of the first battery 2 or the lower portion of the second battery 4 in the housing recess section 52. In so doing, the locking lug 60 is moved to the side by being pressed against the side surface 10E of the first or second battery 2 or 4.
If, in this state, the first or second battery 2 or 4 is moved in the direction of the front surface 52A, the portions of the engagement walls 12 next to the notches 14 are engaged with the corresponding engagement grooves 56, and the contacts 3002 of the connector section 30 and the contacts 5802 of the electronic device side connector section 58 contact one another.
At this point, as the side surface 10E moves away from the locking lug 60, the locking lug 60 protrudes sideways and engages with the rear surface 10B of the first or second battery 2 or 4, and the first or second battery 2 or 4 is attached to the battery attachment section 50.
Thus, a DC current from the first or second battery 2 or 4 is provided to various sections of the electronic device.

In the second embodiment, as shown in Fig. 10 and Fig. 11, no notches 5202 for housing the locking walls 16 like those in the first embodiment are provided on the battery attachment section 50, and therefore, the first and second batteries 2 and 4 are attached in a state where the locking walls 16 protrude upward from the upper surface 104.
In addition, unlike the first embodiment, since the first and second batteries 2 and 4 are attached with the upper surface 10C and the lower surface 10D reversed, the depth of the housing recess section 52 is such that, as shown in Fig. 12B, the upper surface 10C and the lower surface 52D are in close proximity when the second battery 4 is attached, and as shown in Fig. 12A, there is created between the upper surface 10C and the lower surface 52D a space corresponding to the difference in thickness between the first and second batteries 2 and 4 when the first battery 2 is attached. In other words, in the battery attachment section 50 of the second embodiment, as compared to the first embodiment, the height of the portion of the first and second batteries 2 and 4 protruding above the upper surface 104 when they are attached is kept small.
In order to detach the first or second battery 2 or 4, the first or second battery 2 or 4 is moved backward in a state where the locking lug 60 is pressed sideways so as to be disengaged from the rear surface 10B of the first or second battery 2 or 4, thereby placing each engagement section 54 within the corresponding notch 14 of the engagement walls 12 of the first or second battery 2 or 4.
Next, the rear of the first or second battery 2 or 4 is held, and the first or second battery 2 or 4 is taken out upward from the housing recess section 52.

According to the second embodiment, as in the first embodiment, the first and second batteries 2 and 4 of differing thicknesses can be housed or attached in or to the battery housing space 40 and the battery attachment section 50 that have different styles of housing or attachment. In addition, it is advantageous in making the case 10 smaller and thinner, and in particular, it is suitable for a battery that uses the battery cell 20 of a rectangular plate-like shape.
In addition, in the present embodiment, since the position of the connector section 30 and the position of the engagement walls 12 in the direction of the thickness of the case 10 are determined in relation to the lower surface 10D, the battery housing space 40 or the battery attachment section 50 that houses the first and second battery 2 and 4 of differing thicknesses or to which they are attached can be provided easily with the lower surface 10D or the engagement walls 12 as a reference.

It is to be noted that the description for the present embodiment takes an imaging apparatus to be the electronic device, however the electronic device is by no means limited to an imaging device, and may of course be any device to which a battery is loaded, such as a lighting apparatus, an audio apparatus, a communications apparatus, a battery charging apparatus or the like.
The presently disclosed embodiments are therefore considered in all respects to be illustrative, and not restrictive. The scope of the invention is indicated by the appended claims, rather than the foregoing description, and all changes that come within the meaning and range of equivalence thereof are intended to be embraced therein.
The present invention contains subject mater related to Japanese Patent Application JP2005-123524 filed in the Japanese Patent Office on April 21, 2005, the entire contents of which being incorporated herein by reference.

## Claims

1. A battery comprising:
a rectangular case having an upper surface and a lower surface positioned at both ends of its thickness, left and right side surfaces positioned at both ends of its width, and a front surface and a rear surface positioned at both ends of its length;
a battery cell housed within said case; and
a connector section provided on said front surface and connected to said battery cell,
wherein midway in the thickness direction of said left and right side surfaces of the case are provided engagement walls extending along the length of the case parallel to said upper surface and lower surface and protruding outward in the width direction, and
wherein notches are provided in each of said left and right engagement walls.

2. The battery according to claim 1, wherein said left and right engagement walls are provided at the same positions in the thickness direction of the left and right side surfaces of the case.

3. The battery according to claim 1 or 2, wherein the thicknesses of the left and right engagement walls are equal, and are uniform along their lengths.

4. The battery according to claim 1, 2 or 3, wherein said left and right engagement walls are formed at the same position on the left and right side surfaces in the thickness and length directions, and are so formed to have the same shape.

5. The battery according to any one of claims 1 to 4, wherein the notches provided in the left and right engagement walls are formed at the corresponding places on the left and right engagement walls in the length direction.

6. The battery according to any one of claims 1 to 5, wherein the notches provided in the left and right engagement walls are formed at the corresponding places in the same shape on the left and right engagement walls in the length direction.

7. The battery according to any one of claims 1 to 6, wherein a plurality of the notches are provided at a certain interval in the left and right engagement walls, and are formed at the corresponding places on the left and right engagement walls in the length direction.

8. The battery according to any one of claims 1 to 7, wherein a plurality of the notches are provided at a certain interval in the left and right engagement walls, and are formed at the corresponding places in the same shape on the left and right engagement walls in the length direction.

9. The battery according to any one of claims 1 to 8, wherein locking walls extending in the thickness direction are provided at the rear end of the left and right engagement walls for preventing backward insertion.

10. The battery according to any one of claims 1 to 9, wherein locking walls extending in the thickness direction are provided at corresponding places in the length direction at the rear end of the left and right engagement walls for preventing backward insertion.

11. The battery according to any one of claims 1 to 10, wherein the cross-section of the battery cell has a rectangular shape of a size that is housable within the case.
